## Europäisches Patentamt
## European Patent Office
## Office européen des brevets

(19)

(11) Veröffentlichungsnummer: **0 205 901**
**B1**

(12) **EUROPÄISCHE PATENTSCHRIFT**

(45) Veröffentlichungstag der Patentschrift:
13.09.89

(51) Int. Cl.⁴: **B 60 R 22/46**

(21) Anmeldenummer: **86106683.5**

(22) Anmeldetag: **16.05.86**

(54) **Sicherheitsgurtanordnung insbesondere für Kraftfahrzeuge.**

(30) Priorität: **21.05.85 DE 3518121**
**21.05.85 DE 3518125**

(43) Veröffentlichungstag der Anmeldung:
**30.12.86 Patentblatt 86/52**

(45) Bekanntmachung des Hinweises auf die Patenterteilung:
**13.09.89 Patentblatt 89/37**

(84) Benannte Vertragsstaaten:
**DE FR GB IT SE**

(56) Entgegenhaltungen:
**EP-A-0 186 880**
**DE-A-2 543 068**
**FR-A-2 180 151**
**GB-A-1 042 533**

(73) Patentinhaber: **Autoflug GmbH & Co**
**Fahrzeugtechnik, Industriestrasse 10 Postfach**
**1180, D-2084 Rellingen 2 (DE)**

(72) Erfinder: **Sedlmayr, Gerhard, Dr.,**
**Königgrätzstrasse 1, D-2000 Hamburg 52 (DE)**
Erfinder: **Grassmuck, Jürgen, Dipl.- Ing.,**
**oeltingsallee 27, D-2080 Pinneberg (DE)**

(74) Vertreter: **Müller, Karl- Ernst, Dr., Patentanwälte**
**Becker, Müller & Pust Eisenhüttenstrasse 2,**
**D-4030 Ratingen 1 (DE)**

LIBER, STOCKHOLM 1989

## Beschreibung

Die Erfindung betrifft eine Sicherheitsgurtanordnung insbesondere für Kraftfahrzeuge mit einem Beckengurt als Bestandteil des Gurtsystems, der mit seinem einen Ende mit einem fahrzeugfesten Teil über eine Verankerung verbunden und an seinem anderen Ende mit einem Gurtschloßteil ausgestattet ist, und einem Verankerungsteil als Träger des anderen Gurtschloßteils, wobei die Enden von Beckengurt einerseits sowie Verankerungsteil andererseits mit einer gegenläufig wirkenden Strammvorrichtung verbunden sind.

Danach ist die Erfindung auf alle Arten von Sicherheitsgurten anwendbar, sowohl auf Dreipunkt-Sicherheitsgurte, bei denen der Gurt von einem meist an der B- oder C-Säule des Kraftfahrzeuges angebrachten Gurtaufroller als Schultergurt zum einen Schloßteil (meist Schloßzunge) und von dort als Beckengurt zu einem Befestigungspunkt an einem fahrzeugfesten Teil verläuft, als auch auf einen Beckengurt, bei dem der Gurt von dem einen Befestigungspunkt über den Beckenbereich der angeschnallten Person bis zu einem danebenliegenden Befestigungspunkt in Form eines Gurtschlosses mit Verankerungsteil verläuft. Insbesondere auf Rücksitzbänken von Kraftfahrzeugen sind beide Gurtarten häufig miteinander kombiniert, indem die jeweils außensitzenden Personen mittels Dreipunktgurten und die dazwischen in der Mitte sitzende Person mittels eines einfachen Beckengurtes in Anschnallposition gehalten werden.

Bei Sicherheitsgurtanordnungen zur Rückhaltung von Personen besteht allgemein das Problem, daß die angeschnallten Personen im Unfallgeschehen, beispielsweise bei einem Zusammenstoß, nicht nur mit dem Oberkörper nach vorne geworfen werden, sondern insbesondere auch unter dem Beckengurt her nach vorne rutschen, wodurch der Beckengurt eine ungünstige Lage hinsichtlich der Gurtgeometrie einnimmt, indem er in den Abdomenbereich des menschlichen Körpers einschneidet. Dies gilt insbesondere natürlich für die lediglich mit einem einfachen Beckengurt gesicherten Personen.

In der DE-A-2 543 068 ist es für Vordersitze von Kraftfahrzeugen bereits vorgeschlagen, den Beckengurt an seinen beiden Enden im wesentlichen gleichzeitig zu strammen, indem die beiden unteren Befestigungspunkte des Beckengurtes über Leitungen mit einer unter dem Sitz angeordneten pyrotechnischen Antriebsvorrichtung mit zwei gegenläufig beweglichen Kolben verbunden sind, die im Auslösefall in entgegengesetzte Richtungen auseinandergetrieben werden und so den Beckengurt strammen. Die vom Beckengurt zu den Kolben führenden Leitungen werden über vorzugsweise Rollen umgelenkt. Eine derartige Lösung ist aber auf heutige Sicherheitsgurtsysteme nicht übertragbar.

Der Erfindung liegt daher die Aufgabe zugrunde, bei einer Sicherheitsgurtanordnung, unabhängig von der Strammung des Schultergurtes, auch für eine unmittelbare Strammung des Beckengurtes Sorge zu tragen.

Ein weiteres Problem bei der Strammung von Beckengurten besteht darin, daß die Verankerungspunkte für den Beckengurtanschluß einerseits sowie das Verankerungsteil als Schloßträger und damit Bestandteil des den Abdomenbereich der angeschnallten Person umgebenden Ringes andererseits und somit der geometrische Verlauf des Beckengurtes durch das Fahrzeug vorbestimmt sind. Dies bedeutet, daß beispielsweise bei einer schmal gebauten Person der Beckengurt beiderseits oder zumindest auf einer Seite des Körpers abstehend geführt ist, so daß selbst bei gestrafftem Beckengurt ein ausreichender Raum zum Durchrutschen der Person gegeben ist. Hinzu kommt, daß die Beckengurte unter einem räumlichen spitzen Winkel bezogen auf ihre Befestigungsebene nach hinten zu den Befestigungspunkten verlaufen und so die angeschnallte Person nicht optimal umschließen; darüberhinaus entstehen durch den spitzen Winkel hohe Kräfte an den Befestigungspunkten, so daß hier ein hoher Aufwand zur Absicherung der angeschnallten Person zu treiben ist. Ein besonderes Gewicht erhält dieses Problem bezüglich der Rücksitzgurte von Kraftfahrzeugen, da insbesondere die Rücksitzbank von einer bis zu drei Personen besetzt sein kann, so daß hier die Verankerungspunkte besonders ungünstig gelegen sein können.

Daher besteht eine weitere Aufgabe der Erfindung darin, gleichzeitig mit der Strammung des Beckengurtes auch die Gurtgeometrie des Beckengurtverlaufs zu verbessern und an alle Sitzkonstellationen anzupassen.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Mit der Erfindung ist zunächst allgemein der Vorteil verbunden, daß durch die am herkömmlichen Verankerungsteil angreifende Strammvorrichtung keine konstruktiven Änderungen am Sicherheitsgurtsystem erforderlich sind und der diesbezügliche Sicherheitsstandard beibehalten werden kann.

Mit der erfindungsgemäßen Lösung ist im wesentlichen der Vorteil verbunden, daß sich der durch den Beckengurt, das Verankerungsteil und die Strammvorrichtung gebildete und den Abdomenbereich der angeschnallten Person umgreifende Gurtring durch die gegenläufige Bewegung von Beckengurt und Verankerungsteil verengt, so daß der Beckengurt in sich gestrammt wird. Dabei wird in vorteilhafter Weise je nach dem herrschenden Widerstand entweder der Beckengurtabschnitt oder das Verankerungsteil zuerst dort eingezogen, wo der Widerstand am geringsten, d. h. die herrschende Gurtlose am größten ist. Die erfindungsgemäß fliegend gelagerte pyrotechnische Antriebsvorrichtung zur Gurtstrammung wird sich dabei relativ zur Bodengruppe des Kraftfahrzeuges so lange bewegen, bis ein Kräftegleichgewicht zwischen Beckengurt einerseits und Verankerungsteil andererseits erreicht ist. Da die Strammbewegung des Verankerungsteils mit Gurtschloß aufgrund des am Schloß umgeschlauften Gurtbandes sowohl den Beckengurt als auch den Schultergurt strammt, dient die nach Erreichen des Kräftegleichgewichts noch überschießende Energie zur Strammung des Obergurtes, indem bei bereits gestrammtem Beckengurt die weitere Bewegung des Schlosses auf den Fahrzeugboden zu eine Strammung des Schultergurtes herbeiführt.

Zu dieser Aufgabenlösung sind zwei vorteilhafte Ausführungsbeispiele zu nennen, wonach einerseits ein Linearstrammer zwischen den Umlenkelementen Verwendung findet, und andererseits ein Gurtaufroller mit einer auf seine Welle einwirkenden Rotationsstrammvorrichtung vorgesehen ist.

Über die damit schon erreichten Vorteile hinaus sieht ein bevorzugtes Ausführungsbeispiel der Erfindung vor, zusätzlich zur fliegenden Anordnung der Strammvorrichtung auch die Verankerungen für den Beckengurtabschnitt sowie das Verankerungsteil in Form der schon genannten Umlenkelemente verschiebbar anzuordnen, wobei diese Verschiebbarkeit nur bei Auslösung der Strammvorrichtung ermöglicht wird. Hiermit ist insbesondere der Vorteil verbunden, daß sich ein Gurtverlauf mehr oder weniger rechtwinklig zur Befestigungsebene der Gurtbestandteile ergibt, indem die Gurte sich in Richtung auf die Person zu bewegen. Somit wird außer der Einkürzung des Gurtringes mit Strammung des Beckengurtes ausgehend vom Becken des Fahrgastes auch die jeweils kürzeste Verbindung zum Verankerungspunkt des Gurtsystems am Fahrzeug automatisch eingestellt, so daß nach Abschluß der Strammbewegung kein freier Raum mehr ein Hindurchrutschen der angeschnallten Person erlaubt. Insofern bewirkt die erfindungsgemäße Anordnung sowohl eine Verbesserung der Gurtgeometrie als auch eine Beseitigung der Gurtlose gleichermaßen.

In der Zeichnung sind Ausführungsbeispiele der Erfindung wiedergegeben, welche nachstehend beschrieben sind.

Es zeigen:

Fig. 1 in schaubildlicher Darstellung eine Sitzbank eines Kraftfahrzeuges mit zwei unterschiedlichen Sicherheitsgurtanordnungen,

Fig. 2 eine fliegend angeordnete Strammvorrichtung als Linearstrammer,

Fig. 3 eine Strammvorrichtung gemäß Fig. 2 mit einem Übertragungselement für die Antriebsbewegung,

Fig. 4 den Gegenstand der Fig. 3 mit Antriebsvorrichtung,

Fig. 5 eine fliegend angeordnete Strammvorrichtung als Gurtaufroller mit Rotationsstrammer,

Fig. 6 in Aufsicht und Seitenansicht die Führung der Aufrollvorrichtung gemäß Fig. 5,

Fig. 7 eine Führungsschiene für die Verschiebung der Umlenkelemente,

Fig. 8 eine ausschnittsweise Darstellung des Schlittens der Führungsschiene,

Fig. 9 die Führungsschiene gemäß Fig. 7 für ein anderes Ausführungsbeispiel.

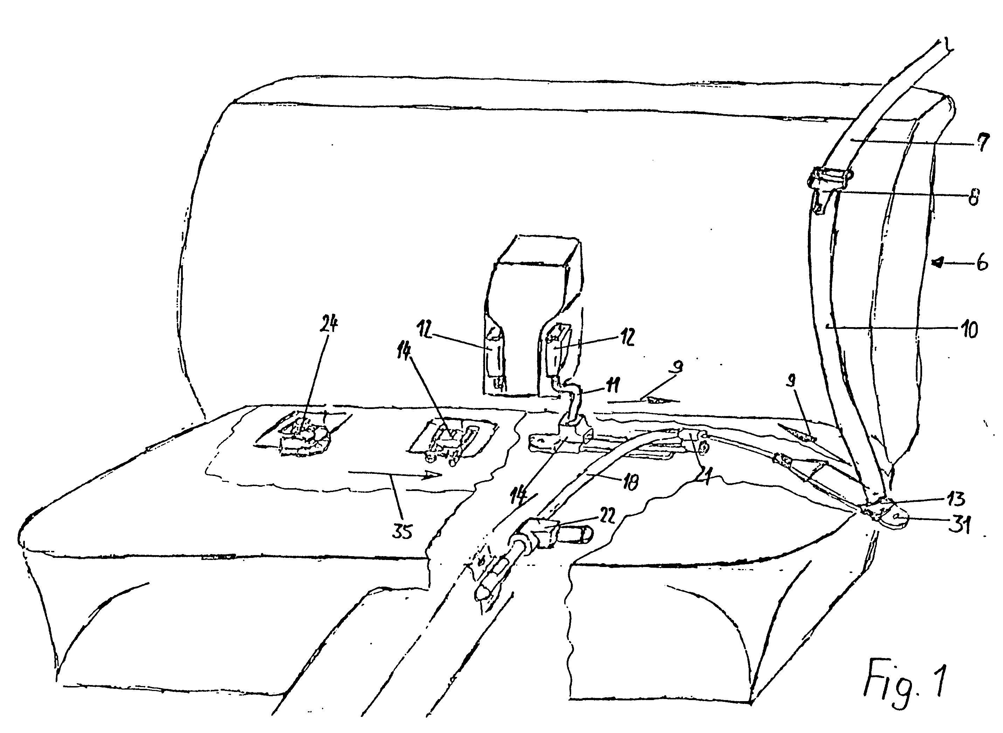

In Figur 1 ist schematisch eine Rücksitzbank 6 eines Kraftfahrzeuges dargestellt, an der zwei unterschiedliche Sicherheitsgurtsysteme gehalten sind. Wie der rechten Hälfte der Figur 1 im einzelnen zu entnehmen ist, verläuft ein Schultergurtabschnitt 7 von einer nicht dargestellten Verankerung am Fahrzeug, vorzugsweise einem selbstsperrenden Gurtaufroller, in Richtung auf die Sitzfläche der Rücksitzbank 6, wo er an einer Schloßzunge 8 in einen Beckengurtabschnitt 10 umgelenkt wird, der alsdann über eine Verankerung 13 mit dem Fahrzeug verbunden ist.

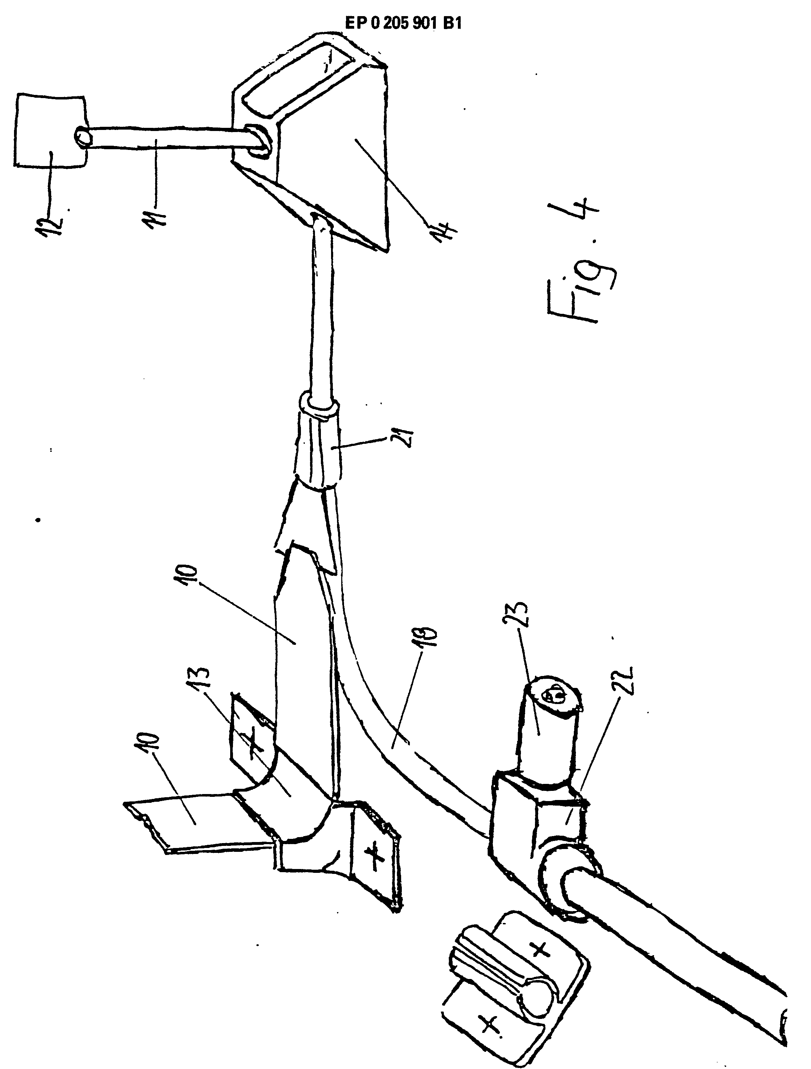

Die Schloßzunge wird beim Anlegen des Sicherheitsgurtes in ein Gurtschloß 12 eingepickt, welches über ein Verankerungsteil 11 und ein Umlenkelement 14 mit dem Fahrzeug verbunden ist. Wie später noch erläutert werden wird, sind sowohl das Umlenkelement 13 für den Beckengurt 10 als auch das Umlenkelement 14 für das Verankerungsteil 11 auf Führungsschienen 31 aufeinander zu in Richtung der Pfeile 9 verschieblich angeordnet. Die Strammvorrichtung gemäß Figur 1 ergibt sich im einzelnen aus der noch zu erläuternden Figur 4.

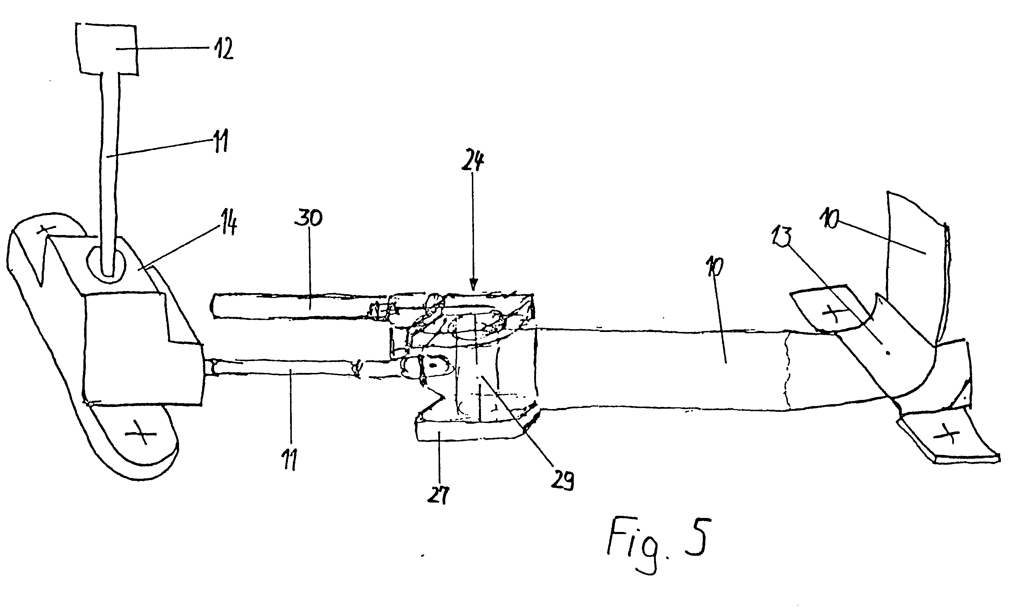

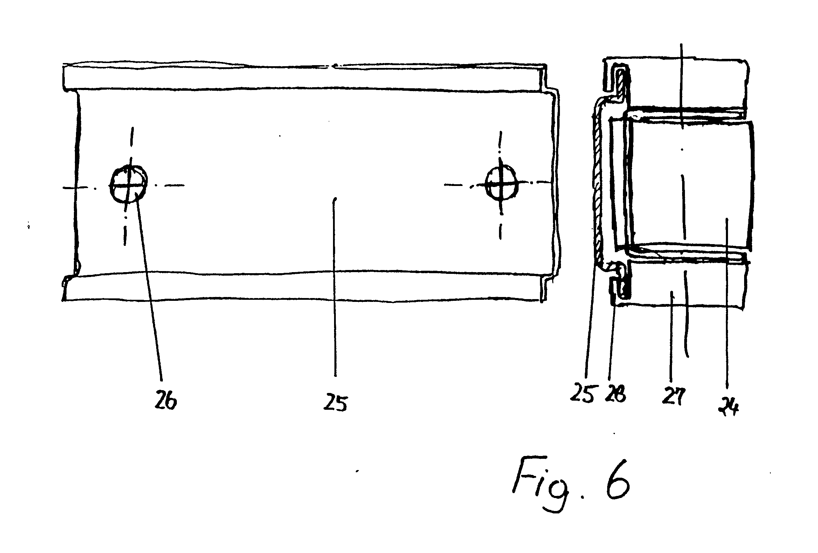

Aus Figur 1 ergibt sich in schematischer Darstellung weiterhin auf der linken Seite der Sitzbank 6 eine andere Art der Anordnung einer Strammvorrichtung zwischen dem zugehörigen Schloß 12 und einer nicht dargestellten Verankerung für den Beckengurt, wobei die Gurtführung derjenigen auf der rechten Figurhälfte entsprechend ausgebildet ist. Diesbezüglich sei insbesondere auf die nachstehend erläuterten Figuren 5 und 6 verwiesen.

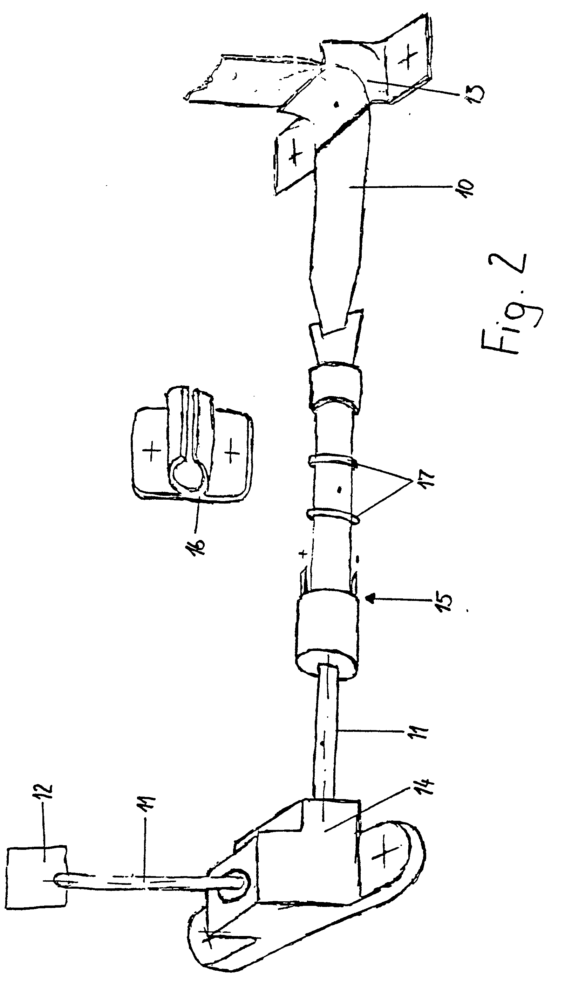

Im einzelnen sei nun das Ausführungsbeispiel eines fliegend angeordneten Linearstrammers erläutert, wie sich dieses aus Figur 2 ergibt.

Der Beckengurt 10 ist an dem Umlenkelement 13 und das Verankerungsteil 11 an dem Umlenkelement 14 jeweils umgelenkt, wobei zwischen den Umlenkelementen 13, 14 eine Antriebsvorrichtung 15 für die Strammbewegung von Beckengurt 10 und Verankerungsteil 11 angeordnet ist. Die Antriebsvorrichtung 15 ist in einem an der nicht dargestellten Bodengruppe eines Kraftfahrzeuges befestigten Halter 16 verschieblich gelagert und mittels Gestaltungen 17 in ihrer Ruhelage festgelegt. Die Gestaltungen 17 sind derart ausgebildet, daß erst im Auslösefall eine Längsverschiebung der Antriebsvorrichtung 15 im Halter 16 erfolgt und daß im übrigen die Antriebsvorrichtung 15 klapperfrei gehalten und gelagert ist. Die Antriebsvorrichtung 15 selbst besteht in bekannter Weise aus einem Führungsrohr und einem darin längsbeweglichen Kolben sowie einer pyrotechnischen Treibladung, deren im Auslösefall freigesetzte Gase für eine Bewegung des Kolbens im Führungsrohr sorgen. Somit sind also Kolben und Führungsrohr der Antriebsvorrichtung 15 relativ zueinander beweglich.

Der Beckengurt 10 ist am Führungsrohr der Antriebsvorrichtung 15 angeschlagen, während das Verankerungsteil 11 in geeigneter Weise in die Antriebsvorrichtung 15 eingeführt und dort am Kolben befestigt ist. Diese Zuordnung kann auch in umgekehrter Weise erfolgen. Der Kolben ist dabei, beispielsweise über einen Schneidring, mit einer Rücklaufsperre versehen, so daß die nach Auslösung aufgrund der Relativbewegung zwischen Kolben- und Führungsrohr erreichte Stellung nach Abschluß der Bewegung erhalten bleibt.

Die in Figur 2 dargestellte Strammvorrichtung arbeitet wie folgt: Sobald im Gefahrenfall in üblicher Weise eine Zündung der Treibladung in der Antriebsvorrichtung 15 erfolgt ist, treiben die Gase den Kolben im Führungsrohr an, womit eine Relativbewegung dieser Teile verbunden ist. Je nachdem an welcher Seite der Antriebsvorrichtung 15, also am Beckengurt 10 oder am Verankerungsteil 11, der Widerstand kleiner, d. h. die betreffende Gurtlose größer ist, erfolgt eine Bewegung der Antriebsvorrichtung 15 durch den Halter 16 in Richtung auf das Umlenkelement 13 oder das Umlenkelement 14 zu, bis ein Kräftegleichgewicht erreicht ist.

Da bei Erreichen des Kräftegleichgewichts der Beckengurt gestrammt ist, führt die weiterhin aus der Antriebsvorrichtung 15 noch zur Verfügung stehende Energie zu einer Bewegung des Schlosses 12 zur Bodengruppe des Kraftfahrzeuges hin, wobei diese Bewegung jedoch aufgrund des gestrafften Beckengurtes nur möglich ist, wenn Gurtband durch die Gurtzunge hindurchgezogen wird, d. h. wenn sich der Beckengurt zu Lasten des Schultergurtes verlängert, wobei das eingestellte Kräftegleichgewicht stets erhalten bleibt.

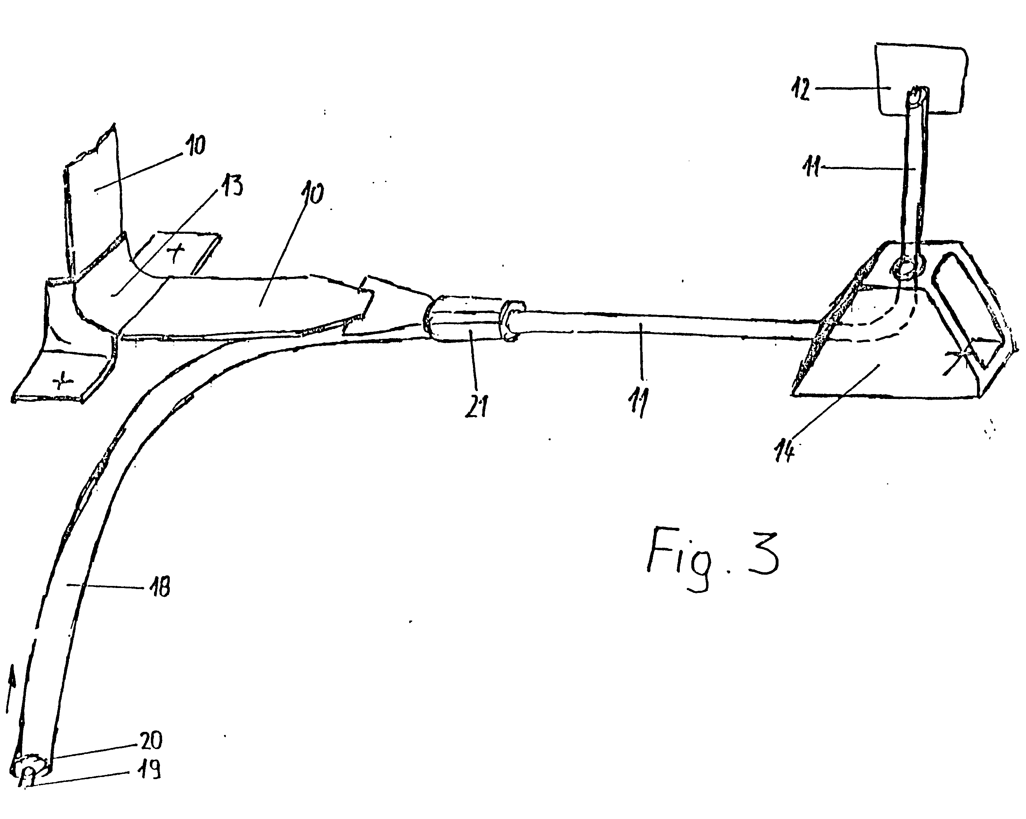

Bei dem in Figur 3 dargestellten Ausführungsbeispiel ist die Antriebsvorrichtung 15 aus der Verbindung zwischen den Umlenkelementen 13, 14 herausverlegt, wobei als Übertragungselement für die Antriebsbewegung ein Bowdenkabel 18 mit einer in einer Bowdenhülle 20 beweglichen Bowdenseele 19 angeordnet ist. Bei dem dargestellten Ausführungsbeispiel ist die Bowdenseele 19 mit dem seilartigen Verankerungsteil 11 und die Bowdenhülle 20 über eine Gurtbandverbindung 21 mit dem Beckengurt 10 verbunden. Die Gurtbandverbindung 21 verfügt ebenfalls über eine Rücklaufsperre.

Wird im Auslösefall von der Bowdenseele 19 her von einer in Figur 3 nicht dargestellten Antriebsvorrichtung, welche aus beweglichen und im Unfallgeschehen aktivierbaren Fahrzeugmassen oder aber einer pyrotechnisch angetriebenen Kolben-Zylinder-Einheit bestehen kann, eine Zugkraft auf die Bowdenseele ausgeübt, so wird die relative Bewegung zwischen Bowdenhülle und Bowdenseele ausgenutzt, um das beschriebene Kräftegleichgewicht zwischen Beckengurt 10 und Verankerungsteil 11 zu erreichen. Die Bowdenhülle 20 leitet die Druckkraft auf die Gurtbandverbindung 21 über, während das Verankerungsteil 11 mit der Bowdenseele 19 verbunden, d. h. einer Zugkraft ausgesetzt ist. Ein Beispiel dafür ist in Figur 4 dargestellt, bei welchem die Bowdenseele 19 mit dem Kolben einer pyrotechnischen Kolben-Zylinder-Einheit 22 mit einem Gasgenerator 23 verbunden ist, welche für die Bewegung der Bowdenseele 19 und damit die Strammbewegung sorgt. Der Vorteil einer derartigen Ausführungsform besteht darin, daß - sofern aus Platzgründen erforderlich - die Antriebsvorrichtung 22 an geeigneter Stelle im Kraftfahrzeug, beispielsweise im oder an dem Kardantunnel, angeordnet sein kann.

Aus den Figuren 5 und 6 ergibt sich nun ein anderes Ausführungsbeispiel, wonach an Stelle des Linearstrammers ein Gurtaufroller mit einer auf seine Welle einwirkenden pyrotechnischen Rotationsstrammvorrichtung angeordnet ist. Hier ist wiederum der Beckengurt 10 in seinem Umlenkelement 13 und das Verankerungsteil 11 in seinem Umlenkelement 14 umgelenkt, wobei zwischen den Umlenkelementen 13, 14 eine Aufrollvorrichtung 24 für die Strammbewegung von Beckengurt 10 und Verankerungsteil 11 angeordnet ist. Die Aufrollvorrichtung 24 ist in einer an der nicht dargestellten Bodengruppe eines Kraftfahrzeuges befestigten Schiene 25 verschieblich gelagert, welche über Bohrungen 26 und ebenfalls nicht dargestellte Verbindungsmittel mit dem Bodenblech formschlüssig derart verbunden ist, daß ein Aufbiegen der Schiene 25 zwischen den Bohrungen 26 ausgeschlossen ist. Das Gehäuse 27 der Aufrollvorrichtung 24 umgreift mit Krallen 28 die außengekröpfte Schiene 25 (Figur 6).

Der Beckengurt 10 ist in die Aufrollvorrichtung 24 eingefädelt und auf einer im Gehäuse 27 gelagerten Welle 29 aufgewickelt, während das Verankerungsteil 11 seinerseits mit dem Gehäuse 27 der Aufrollvorrichtung 24 fest verbunden ist. An der Welle 29 der Aufrollvorrichtung 24 greift eine in an sich bekannter Weise mit der Welle verbundene Strammvorrichtung 30 an, in welcher ein gasgetriebener Kolben im Auslösefall für eine Drehbewegung der Welle 29 sorgt. Auf der Welle 29 ist weiter ein radial bis zum Eingriff in eine gehäusefeste Sperrverzahnung auslenkbares Sperrglied gelagert, welches als Rücklaufsperre die Welle nach Abschluß der Wickelbewegung gegen deren Rückdrehung sperrt.

Die vorbeschriebene Anordnung arbeitet folgendermaßen: Sobald im Gefahrenfall eine Zündung der Treibladung in der Strammvorrichtung 30 der Aufrollvorrichtung 24 von einem Fahrzeugsensor aus erfolgt, treiben die Gase den Kolben der Strammvorrichtung 30 an und versetzen die Welle 29 in Drehung. Je nachdem an welcher Stelle des Sicherheitsgurtsystems, also am Beckengurt 10 oder am Verankerungsteil 11, der Widerstand kleiner, d. h. die betreffend dort herrschende Gurtlose größer ist, erfolgt entweder zunächst eine Aufwickelbewegung des Gurtbandes 10 auf der Welle 29 oder aber die Zugkraft sucht sich am Gehäuse 27 und damit am Verankerungsteil 11 abzustützen. Eine derart ausgeübte Zugkraft führt zur Verschiebung der Aufrollvorrichtung 24 auf der Schiene 25 in Richtung des Umlenkelementes 13, so daß in einem derartigen Fall zunächst das Verankerungsteil 11 durch das Umlenkelement 14 hindurchgezogen und das Schloß 12 in Richtung des Fahrzeugbodens bewegt wird. Damit erfolgt eine Strammbewegung des Becken- wie auch des Schultergurtes infolge der Schloßumlenkung des Gurtbandes. Dieser Bewegungsablauf vollzieht sich, bis ein Kräftegleichgewicht erreicht ist, wie schon beschrieben.

Wie nicht weiter dargestellt, kann in vorteilhafter Weise die Aufrollvorrichtung 24 für den Beckengurt 10 durch einen an sich bekannten Gurtaufroller mit einem fahrzeug- wie auch gurtbandsensitiven Blockiersystem mit automatischem Einzug des Gurtbandes ersetzt sein, womit der besondere Vorteil verbunden ist, daß ein derartiger Gurtaufroller den Beckengurt bei jeder Bewegung des angeschnallten Insassen nachgibt, bzw. einzieht, wie dies auch bei den bekannten Sicherheitsgurtaufrollern in Sicherheitsgurtanordnungen der Fall ist, so daß die Gurtlose des Beckengurtes schon von vornherein geringer sein wird, wodurch sich die Strammung des Beckengurtes gemäß der Erfindung noch effektiver auswirken dürfte.

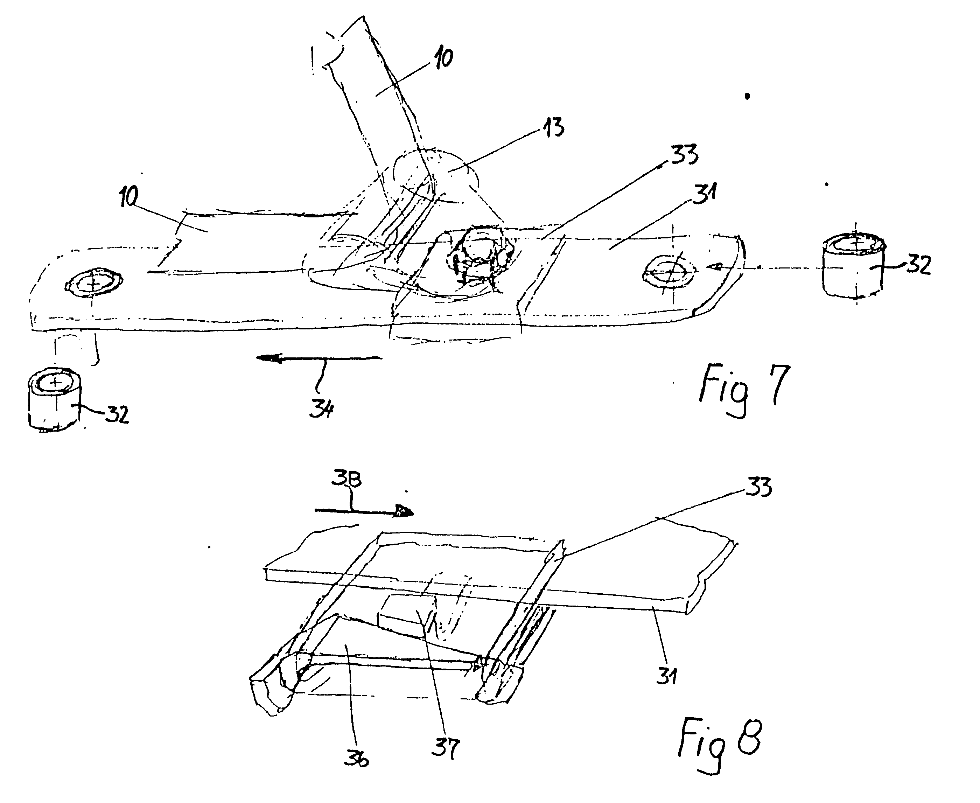

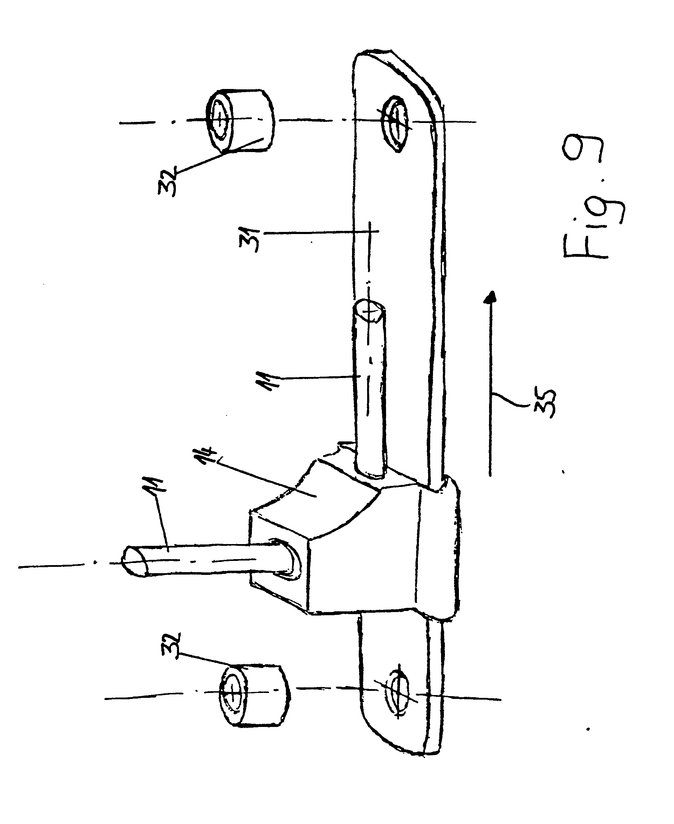

Aus den Figuren 7 bis 9 ergibt sich nun, wie zusätzlich zu der fliegenden Anordnung der Strammvorrichtungen 15, 23, 24 die jeweiligen Umlenkelemente 13, 14 für den Beckengurtabschnitt 10 und das Verankerungsteil 11 verschiebbar angeordnet sind. Hierzu ist an dem Fahrzeug für jedes Element 13, 14 eine Führungsschiene 31 über Buchsen 32 angebracht. Auf der Führungsschiene 31 ist verschiebbar ein Schlitten 33 als Träger des jeweiligen Umlenkelementes 13, 14 angeordnet. Wie sich aus der Figur 7 im einzelnen ergibt, trägt dort der Schlitten 33 das Umlenkelement 13 für den Beckengurt 10, wobei der Beckengurt 10 in Richtung des Pfeils 34 zu der Strammvorrichtung 15 entsprechend der Darstellung in Figur 2 geführt ist. Entsprechendes gilt für Figur 9, gemäß welcher der Schlitten 33 mit dem Umlenkelement 14 für das Verankerungsteil 11 in Richtung des Pfeils 35 bewegbar ist.

Wie sich im einzelnen aus Figur 8 ergibt, sind Schlitten 33 und Führungsschiene 31 mittels einer Rücklaufsperre gegen eine den Pfeilen 34, 35 entgegengesetzte Bewegung gesichert, wobei die Rücklaufsperre zwei miteinander zusammenwirkende Keile 36, 37 umfaßt, von denen der Keil 36 formschlüssig mit dem Schlitten 33 verbunden ist, während der auf der zugeordneten Keilfläche angeordnete weitere Keil 37 unter federnder Vorspannung gegen die Führungsschiene 31 zwischen der Führungsschiene 31 und dem diese U-förmig umgreifenden Schlitten 33 eingesetzt ist. Somit ergibt sich eine zugeordnete Sperrwirkung bei Bewegungen des Schlittens in Richtung des Pfeils 38.

Wie im einzelnen nicht weiter dargestellt, jedoch zu der fliegenden Anordnung einer Strammvorrichtung schon beschrieben, sind auch die Schlitten 33 in den Führungsschienen 31 durch Scherstifte gesichert, welche so bemessen sind, daß diese erst bei Auslösung der Strammvorrichtung abscheren und somit die Bewegung der Schlitten 33 mit den zugeordneten Umlenkelementen 13, 14 freigeben.

## Patentansprüche

1. Sicherheitsgurtanordnung insbesondere für Kraftfahrzeug mit einem Beckengurt (10) als Bestandteil des Gurtsystems, der mit seinem einen Ende mit einem fahrzeugfesten Teil (31) über eine Verankerung (13) verbunden und an seinem anderen Ende mit einem Gurtschloßteil (8) ausgestattet ist, und einem Verankerungsteil (11) als Träger des anderen Gurtschloßteils (12), wobei die Enden des Beckengurtes sowie des Verankerungsteils mit einer gegenläufig wirkenden Strammvorrichtung (15, 21, 24) verbunden sind, dadurch gekennzeichnet, daß die zwischen den als Umlenkelemente (13, 14) für den Beckengurtabschnitt (10) und das aus einem Drahtseilabschnitt bestehende Verankerungsteil (11) wirkenden Verankerungen angeordnete Strammvorrichtung (15, 21, 24) in fliegender Anordnung mit in Richtung auf die Umlenkelemente (13, 14) frei verschieblichen und relativ zueinander beweglichen Verbindungen von Strammvorrichtung (15, 21, 24) mit dem Beckengurtende (10) einerseits und mit dem Verankerungsteil (11) andererseits gehaltert ist.

2. Sicherheitsgurtanordnung nach Anspruch 1, dadurch gekennzeichnet, daß als Strammvorrichtung zwischen den Umlenkelementen (13, 14) eine Aufrollvorrichtung (24) mit einer auf deren Welle (29) einwirkenden Stammvorrichtung (30) längsverschiebbar angeordnet ist.

3. Sicherheitsgurtanordnung nach Anspruch 2, dadurch gekennzeichnet, daß das freie Ende des Beckengurtes (10) auf der Welle (29) der Aufrollvorrichtung (24) aufgewickelt und das Verankerungsteil (11) mit dem die Welle (29) lagernden Gehäuse (27) der Aufrollvorrichtung (24) verbunden ist.

4. Sicherheitsgurtanordnung nach Anspruch 3, dadurch gekennzeichnet, daß die Aufrollvorrichtung (24) in an sich bekannter Weise ein radial auslenkbares Sperrglied mit einem zugeordneten gehäusefesten Druckring als Rücklaufsperre aufweist.

5. Sicherheitsgurtanordnung nach einem der Ansprüche 2 - 4, dadurch gekennzeichnet, daß die Aufrollvorrichtung (24) mittels einer Gleitführung (28) auf einer mit dem Fahrzeug formschlüssig verbundenen Führungsschiene (25) verschiebbar eingerichtet ist.

6. Sicherheitsgurtanordnung nach einem der Ansprüche 2 - 5, dadurch gekennzeichnet, daß die Aufrollvorrichtung (24) als an sich bekannter selbstsperrender Gurtaufroller mit einem fahrzeug- wie auch gurtbandsensitiven Blockiersystem ausgebildet ist.

7. Sicherheitsgurtanordnung nach Anspruch 1, dadurch gekennzeichnet, daß als Strammvorrichtung ein pyrotechnischer Linearstrammer vorgesehen ist, wobei eine Antriebsvorrichtung (15) in einem an der Bodengruppe des Kraftfahrzeuges befestigten Halter (16) längsverschiebbar und fliegend zwischen den beiden Umlenkelementen (13, 14) angeordnet ist, wobei der Beckengurt (10) mit dem Zylinder und das Verankerungsteil (11) mit dem Kolben der mit einer pyrotechnischen Treibladung versehenen Antriebsvorrichtung (15) verbunden ist.

8. Sicherheitsgurtanordnung nach Anspruch 1, dadurch gekennzeichnet, daß die Antriebsvorrichtung (15) aus der Verbindungslinie zwischen den Umlenkelementen (13, 14) gerückt und mit Beckengurt (10) und Verankerungsteil (11) über ein als Übertragungselement wirkendes Bowdenkabel (18) verbunden ist, wobei die gegenüber der Bowdenhülle (20) bewegliche Bowdenseele (19) mit dem Verankerungsteil (11) und das Gurtband (10) mittels einer Gurtbandverbindung (21) mit der Bowdenhülle (20) verbunden ist.

9. Sicherheitsgurtanordnung nach Anspruch 1, dadurch gekennzeichnet, daß die Umlenkelemente (13, 14) auf einer formschlüssig mit der Bodengruppe des Kraftfahrzeuges verbundenen Führungsschiene (31) verschiebbar, insbesondere aufeinander zu (34, 35) verschiebbar, mit einer Rücklaufsperre (36, 37) versehen und in ihrer Ausgangsstellung durch die Umlenkelemente (13, 14) bei Erreichen einer vorbestimmten Last freigebende Sicherungsmittel gesichert sind.

10. Sicherheitsgurtanordnung nach Anspruch 9, dadurch gekennzeichnet, daß jedes Umlenkelement (13, 14) je auf einem Schlitten (33) befestigt ist, welcher die Führungsschiene (31) einfassend auf dieser längsverschiebbar ist.

11. Sicherheitsgurtanordnung nach Anspruch 9 und 10, dadurch gekennzeichnet, daß das den Schlitten (33) festlegende Sicherungsmittel als ein derartig dimensionierter Scherstift ausgebildet ist, daß die Abscherung nur bei Auslösung der Strammvorrichtung erfolgt.

12. Sicherheitsgurtanordnung nach Anspruch 9 und 10, dadurch gekennzeichnet, daß als Rücklaufsperre zwischen Schlitten (33) und Führungsschiene (31) in Sperrichtung (Pfeil 38) sich gegeneinander verspannende Keile (36, 37) vorgesehen sind, von denen der eine Keil (36) formschlüssig mit dem Schlitten (33) verbunden und der andere Keil (37) federnd gegen die Führungsschiene (31) vorgespannt ist.

## Claims

1. Safety-belt arrangement particularly for a motor vehicle, having a pelvic belt (10) as a component of the belt system, which is connected at one end to a part (31) integral with the vehicle, via an anchorage (13), and is equipped at its other end with a belt buckle part (8), and an anchorage part (11) as the carrier of the other belt buckle part (12), the ends of the pelvic belt and the anchorage part being connected to a tightening device (15, 21, 24) acting in the opposite direction, characterised in that the tightening device (15, 21, 24) arranged between the anchorages which act as guide elements (13, 14) for the pelvic belt portion (10) and the anchorage part (11) consisting of a length of wire cable, is clamped in an overhung arrangement with the tightening device (15, 21, 24) being connected to the pelvic belt end (10) on the one hand and to the anchorage part (11) on the other hand, by means of connections which are freely displaceable towards the guide elements (13, 14) and moveable relative to one another.

2. Safety belt arrangement according to claim 1, characterised in that, as the tightening device between the guide elements (13, 14) there is a reeling device (24), arranged so as to be longitudinally moveable, with a tightening device (30) acting on the spindle (29) thereof.

3. Safety belt arrangement according to claim 2, characterised in that the free end of the pelvic belt (10) is wound on the spindle (29) of the reeling device (24) and the anchorage part (11) is connected to the housing (27) of the reeling device (24) which forms the mounting for the spindle (29).

4. Safety belt arrangement according to claim 3, characterised in that the reeling device (24) comprises, in a manner known per se, a radially deflectable locking member with an associated thrust ring, integral with the housing, as a means for preventing return movement.

5. Safety belt arrangement according to one of claims 2 to 4, characterised in that the reeling device (24) is arranged to be displaceable by means of a sliding guide (28) along a guide rail (25) which is positively connected to the vehicle.

6. Safety belt arrangement according to one of claims 2 to 5, characterised in that the reeling device (24) is constructed as a self-locking belt reeling means, known per se, with a blocking system which is both vehicle-sensitive and belt-sensitive.

7. Safety belt arrangement according to claim 1, characterised in that a pyrotechnic linear tightener is provided as the tightening device, whilst a drive mechanism (15) is mounted in longitudinally moveable and overhung manner between the two guide elements (13, 14) in a holder (16) secured to the floor assembly of the vehicle, the pelvic belt 10 being connected to the cylinder and the anchorage part (11) being connected to the piston of the drive mechanism (15), which comprises a pyrotechnic propellent charge.

8. Safety belt arrangement according to claim 1, characterised in that the drive mechanism (15) is moved out of the connecting line between the guide elements (13, 14) and is connected to the pelvic belt (10) and anchorage part (11) by means of a Bowden cable (18) acting as a transmission element, whilst the Bowden cable core (19) which is moveable relative to the Bowden cable casing (20) is connected to the anchorage part (11) and the belt (10) is connected to the Bowden casing (20) by means of a belt connection (21).

9. Safety belt arrangement according to claim 1, characterised in that the guide elements (13, 14) are moveable along a guide rail (31), more particularly are moveable towards one another (34, 35), said guide rail (31) being tensionally connected to the floor assembly of the motor vehicle, the guide elements (13, 14) are provided with means 36, 37 for preventing the return movement and are secured in their starting position by securing means which release the guide elements (13, 14) when a predetermined load is reached.

10. Safety belt arrangement according to claim 9, characterised in that each guide element (13, 14) is fixed on a carriage (33) which, fitting over the guide rail (31), is longitudinally moveable thereon.

11. Safety belt arrangement according to claims 9 and 10, characterised in that the securing means which fix the carriage (33) are in the form of a shearing pin which is dimensioned so that it shears only when the tightening device is actuated.

12. Safety belt arrangement according to claims 9 and 10, characterised in that keys (36, 37) braced against each other are provided as the means for preventing return movement between the carriage (33) and the guide rail (31) in the direction of blocking (arrow 38), one key (36) being connected to the carriage (33) by virtue of its shape whilst the other key (37) is spring-biased against the guide rail (31).


**Revendications**

1. Ensemble de ceinture de sécurité, notamment pour un véhicule automobile, avec une ceinture sous-abdominale (10) faisant partie du système de ceinture, laquelle est reliée à une de ses extrémités à un élément (31) solidaire du véhicule par l'intermédiaire d'un ancrage (13), et laquelle est équipée à son autre extrémité d'une partie (8) de boucle de ceinture, et avec un élément d'ancrage (11) comme élément porteur de l'autre partie (12) de boucle de ceinture, les extrémités de la ceinture sous-abdominale ainsi que de l'élément d'ancrage étant reliées à un dispositif tendeur (15, 21, 24) agissant en sens contraires, caractérisé en ce que le dispositif tendeur (15, 21, 24), disposé entre les ancrages jouant le rôle d'éléments de renvoi (13, 14) pour le tronçon de ceinture sous-abdominale (10) et pour l'élément d'ancrage (11) consistant en un tronçon de câble métallique, est maintenu en montage flottant par des liaisons, librement déplaçables en direction des éléments de renvoi (13, 14) et mobiles les unes par rapport aux autres, du dispositif tendeur (15, 21, 24) avec, d'une part, l'extrémité de la ceinture sous-abdominale (10) et, d'autre part, l'élément d'ancrage (11).

2. Ensemble de ceinture de sécurité selon la revendication 1, caractérisé en ce que, comme dispositif tendeur, un dispositif enrouleur (24), muni d'un dispositif tendeur (30) agissant sur son arbre (29), est disposé longitudinalement déplaçable entre les éléments de renvoi (13, 14).

3. Ensemble de ceinture de sécurité selon la revendication 2, caractérisé en ce que l'extrémité libre de la ceinture sous-abdominale (10) est enroulée sur l'arbre (29) du dispositif enrouleur (24), et l'élément d'ancrage (11) est reliée au boîtier (27) du dispositif enrouleur (24), boîtier qui loge l'arbre (29).

4. Ensemble de ceinture de sécurité selon la revendication 3, caractérise en ce que le dispositif enrouleur (24) présente, d'une manière connue en soi, un organe de blocage orienté radialement, avec une bague de pression associée, fixée au boîtier, comme blocage antiretour.

5. Ensemble de ceinture de sécurité selon l'une des revendications 2 à 4, caractérisé en ce que le dispositif enrouleur (24) est, par l'intermédiaire d'un guide coulissant (28), monté déplaçable sur une glissière (25) assemblée par complémentarité de forme au véhicule.

6. Ensemble de ceinture de sécurité selon l'une des revendications 2 à 5, caractérisé en ce que le dispositif enrouleur (24) est réalisé sous la forme d'un enrouleur de ceinture autobloquant connu en soi, avec un système de blocage réagissant au véhicule ainsi qu'à la sangle de ceinture.

7. Ensemble de ceinture de sécurité selon la revendication 1, caractérisé en ce qu'il est prévu comme dispositif tendeur un tendeur linéaire pyrotechnique, un dispositif d'entraînement (15) étant disposé longitudinalement déplaçable dans un support (16) fixé à l'ensemble de plancher du véhicule, et flottant entre les deux éléments de renvoi (13, 14), la ceinture sous-abdominale (10) étant reliée au cylindre et l'élément d'ancrage (11) au piston du dispositif d'entraînement (15) muni d'une charge propulsive pyrotechnique.

8. Ensemble de ceinture de sécurité selon la revendication 1, caractérisé en ce que le dispositif d'entraînement (15) est sorti de la ligne de jonction entre les éléments de renvoi (13, 14) et relié à la ceinture sous-abdominale (10) et à l'élément d'ancrage (11) par l'intermédiaire d'un ensemble de câble Bowden (18) jouant le rôle d'élément de transmission, le câble Bowden (19), mobile par rapport à la gaine de câble Bowden (20), étant relié à l'élément d'ancrage (11), et la sangle de ceinture (10) étant reliée à la gaine de câble Bowden (20) au moyen d'une pièce d'assemblage (21) de sangle de ceinture.

9. Ensemble de ceinture de sécurité selon la revendication 1, caractérisé en ce que les éléments de renvoi (13, 14) sont déplaçables, notamment déplaçables l'un vers l'autre (34, 35), sur une glissière (31) assemblée par complémentarité de forme à l'ensemble de plancher du véhicule automobile, sont munis d'un blocage antiretour (36, 37), et sont fixés à leur position initiale par des moyens de sûreté qui libèrent les éléments de renvoi (13, 14) à l'atteinte d'une charge prédéterminée.

10. Ensemble de ceinture de sécurité selon la revendication 9, caractérisé en ce que chaque élément de renvoi (13, 14) est fixé sur un chariot (33) respectif, qui englobe la glissière (31) et est longitudinalement déplaçable sur cette dernière.

11. Ensemble de ceinture de sécurité selon les revendications 9 et 10, caractérisé en ce que le moyen de sûreté fixant en position le chariot (33) est réalisé sous la forme d'un goujon de sûreté à cisaillement qui est dimensionné de telle sorte que le cisaillement n'a lieu que lors du déclenchement du dispositif tendeur.

12. Ensemble de ceinture de sécurité selon les revendications 9 et 10, caractérisé en ce que sont prévues, comme blocage antiretour entre le chariot (33) et la glissière (31), des cales (36, 37) qui se bloquent l'une contre l'autre dans le sens de blocage (flèche 38), une cale (36) étant assemblée par complémentarité de forme au chariot (33), et l'autre cale (27) étant précontrainte élastiquement contre la glissière (31).

Fig. 1

Fig. 2

Fig. 3

Fig. 4

Fig. 5

EP 0 205 901 B1

Fig. 6

EP 0 205 901 B1

Fig 7

Fig 8

EP 0 205 901 B1

Fig. 9